(19) **Europäisches Patentamt**

**European Patent Office**

**Office européen des brevets**

(11) **EP 1 231 454 B1**

(12) **EUROPÄISCHE PATENTSCHRIFT**

(45) Veröffentlichungstag und Bekanntmachung des Hinweises auf die Patenterteilung:
**03.05.2006 Patentblatt 2006/18**

(51) Int Cl.:
***G01B 11/16*** (2006.01)

(21) Anmeldenummer: **02002867.6**

(22) Anmeldetag: **08.02.2002**

(54) **Vorrichtung und Verfahren zur Durchführung interferometrischer Messungen**

Device and method for carrying out interferometric measurements

Dispositif et méthode pour effectuer des mesures interférométriques

(84) Benannte Vertragsstaaten:
**AT DE FR GB NL**

(30) Priorität: **08.02.2001 DE 10106079**

(43) Veröffentlichungstag der Anmeldung:
**14.08.2002 Patentblatt 2002/33**

(73) Patentinhaber: **Deutsches Zentrum für Luft- und Raumfahrt e.V.**
**51147 Köln (DE)**

(72) Erfinder:
- **Fürstenau, Norbert, Dipl.-Phys. Dr.**
  **38104 Braunschweig (DE)**
- **Werther, Bernd Dipl.-Ing.**
  **38108 Braunschweig (DE)**
- **Schmidt, Markus Dipl.-Ing.**
  **31141 Hildesheim (DE)**

(74) Vertreter: **Einsel, Martin**
**Patentanwälte,**
**Einsel & Kollegen,**
**Jasperalle 1a**
**38102 Braunschweig (DE)**

(56) Entgegenhaltungen:
**US-A- 5 646 399          US-A- 5 910 840**

- SCHMIDT M ET AL: "FIBER-OPTIC EXTRINSIC FABRY-PEROT INTERFEROMETER SENSORS WITH THREE-WAVELENGTH DIGITAL PHASE DEMODULATION" OPTICS LETTERS, OPTICAL SOCIETY OF AMERICA, WASHINGTON, US, Bd. 24, Nr. 9, 1. Mai 1999 (1999-05-01), Seiten 599-601, XP000830379 ISSN: 0146-9592

**Beschreibung**

Die Erfindung betrifft ein Verfahren und eine Vorrichtung zur Durchführung interferometrischer Messungen.

Interferometrische und polarimetrische Sensoren besitzen Ausgangssignale mit $\sin^2$ - und $\cos^2$ -förmiger Abhängigkeit der messgrößeninduzierten Phasendifferenz zwischen der Messlichtwelle und der Referenzlichtwelle. Sie sind infolge dessen nichtlinear und periodisch, was ihre Auswertung erschwert. Bragg-Reflektor-Sensoren weisen eine dehnungs- und temperaturabhängige Wellenlängenverstimmung ihres spektralen Reflexionsmaximums auf, was eine hochaufgelöste Wellenlängenmessung erfordert.

Hierzu werden spezielle Demodulationsverfahren zur Arbeitspunktstabilisierung bei Kleinsignalauslesung und zur Erzielung der Eindeutigkeit der Messgrößenänderung bei großen Phasenänderungen benötigt. Dies ist insbesondere auf Grund des sogenannten Signal-fadings des periodischen Interferenzsignals auf Grund von Temperaturdrifteffekten notwendig, bei dem das Messsignal bei maximaler und minimaler Intensität jeweils verschwindet. Weiterhin bewirkt die Periodizität bei großen Phasenänderungen eine Uneindeutigkeit des Ausgangssignals bezüglich des Vorzeichens. Eine an den Interferometerausgang angeschlossene Photodiode zur elektronischen Weiterverarbeitung registriert die dieselben Hell-Dunkel-Wechsel unabhängig von der Richtung der Messgrößenänderung.

Zur Lösung dieses Problems sind bereits verschiedene Anstrengungen unternommen worden. In Applied Optics 30 (1991) 4026-4033 "Synthetic wavelength stabilization for two color laser-diode interferometry" wird vorgeschlagen, zwei Lichtquellen mit unterschiedlicher Wellenlänge zu verwenden, wobei bei der vorgeschlagenen Messanordnung das bei einer Wellenlänge $\lambda_1$ ermittelte Signal gerade eine minimalen Wert annimmt, wenn das mit der zweiten Wellenlänge $\lambda_2$ ermittelte Signal gerade ein maximales Signal bewirkt. Durch eine geeignete Kombination der Messausgänge oder eine periodische Umschaltung zwischen den beiden Wellenlängen kann eine trägerfrequenzmodulierte Phasenmessung mit vorzeichenrichtiger Auslesung erreicht werden.

Nachteilhaft an einem derartigen System sind die relativ hohen Kosten auf Grund der beiden Lichtquellen und zusätzlichen Einrichtungen hierzu.

In der DE 196 28 200 A1 und in anderer Form von Markus Schmidt und Norbert Fürstenau in: Optics Letters 24 (1999), Seiten 599 bis 601, wird ein System gezeigt, bei dem das Licht einer einzigen Lichtquelle einem Interferometer oder polarimetrischen Sensor zugeführt wird, das von diesem Sensor wieder abgegebene Licht in zwei oder mehr Strahlengänge unterteilt wird und in jedem Strahlengang jeweils ein justierbares Interferenzfilter mit unterschiedlicher Zentralwellenlänge vorgesehen ist. Durch geeignete Kippwinkeleinstellungen der unterschiedlichen Interferenzfilter können die mindestens zwei ausgekoppelten Interferenzsignale in Quadratur, das heißt 90 Grad Phasendifferenz, gebracht werden. Die durch das Interferenzfilter gelangten Strahlengänge werden jeweils von einer Messeinrichtung zur quantitativen Messung erfasst.

Nachteilig an diesem System ist der relativ hohe Aufwand, der durch die Verwendung der mindestens zwei getrennten Strahlengänge mit der erforderlichen genauen Verstellbarkeit der jeweiligen Interferenzfilterentsteht. Weiterhin ist bei diesem System eine Kühlung der Lichtquelle notwendig, um eine konstante Lichtleistung und Abstrahlcharakteristik der Lichtquelle zu erreichen.

Zu einem ganz anderen Verwendungszweck, nämlich für ein einstellbares Filterelement, wird in der US-PS 5,646,399 ebenfalls das Licht einer Lichtquelle mit einem Strahlteiler in drei Strahlengänge unterteilt und dann auf ein dielektrisches mehrschichtiges Folienfilter gegeben. Dadurch sollen bestimmte Wellenlängenanpassungen möglich werden. Für interferometrische Messungen ist eine solche Konzeption weder gedacht noch geeignet, da die Fertigungstoleranzen der Filterelemente, zum Beispiel die Inhomogenität der Beschichtung und die Schwankungen des Brechungsindex, keine Vorausberechnungen der Einfallswinkel zulassen würden. Auch ist der theoretische, physikalische Zusammenhang zwischen dem Kippwinkel einer solchen Folie und der Verschiebungswellenlänge kompliziert und auf jeden Fall nicht linear, so dass keine geeigneten Signale erzeugt werden können, um interferometrische Messungen durchzuführen.

Der Erfindung liegt die Aufgabe zugrunde, gegenüber dem Stand der Technik Verbesserungen zu schaffen und insbesondere mit geringem Aufwand ein Verfahren und eine Vorrichtung zur Durchführung interferometrischer Messungen zu schaffen, mit denen Messsignale eines Interferometers oder polarimetrischen Sensors oder wellenlängenmodulierter Sensoren mit genau einstellbaren, unterschiedlichen Wellenlängen vermessen werden können. Hierbei sollen die Interferenzsignale vorteilhafterweise in eine Phasenbeziehung (zum Beispiel Quadratur) gesetzt werden und eine genaue Bestimmung der Phasenänderungen ermöglicht werden. Gleichzeitig soll vorteilhafterweise mit dieser Vorrichtung die genaue Wellenlänge eines $\lambda$-modulierten Bragg-Reflektor-Sensors bestimmbar sein.

Diese Aufgabe wird zum einen gelöst durch ein Verfahren, zum Durchführen interferometrischer Messungen, bei dem Licht einer Interferometersensoreinrichtung oder polarimetrischenSensoreinrichtung oder einer wellenlängenmodulierten Sensoreinrichtung zugeführt wird, das von der Interferometersensoreinrichtung oder polarimetrischen Sensoreinrichtung oder wellenlängenmodulierten Sensoreinrichtung abgegebene Licht in mindestens zwei Strahlengänge (9, 10, 11) aufgeteilt wird, die unter verschiedenen Einfallswinkeln ($\vartheta 1$, $\vartheta 2$, $\vartheta 3$) durch einen gemeinsamen optischen Bandpassfilter geleitet werden, und die durch den optischen Bandpassfilter gelangten Strahlengänge quantitativ gemessen werden und die Messung in einer Datenverarbeitungseinrichtung ausgewertet wird, wobei mindestens ein Einfallswinkel eines Strahlenganges verstellbar ist und Messungen bei verschiedenen Werten des Einfallswinkels vomehmbar sind, und wobei die Einfallswinkel der anderen Strahlengänge konstant bleiben.

Weiterhin wird diese Aufgabe gelöst durch eine Vorrichtung zum Durchführen interferometrischer Messungen, insbesondere zur Durchführung eines Verfahrens nach einem der Ansprüche 1 bis 11, mit einer Lichtquelle, einer Interferometersensoreinrichtung oder polarimetrischen Sensoreinrichtung oder wellenlängenmodulierten Sensoreinrichtung, einer Strahlungsteilereinrichtung zum Aufteilen einer von der Interferometersensoreinrichtung oder polarimetrischenSensoreinrichtung oder wellenlängenmodulierten Bragg-Sensoreinrichtung abgegebenen Strahlung in mindestens zwei Strahlengänge, einem gemeinsamen optischen Bandpassfilter, das in den Strahlengängen angeordnet ist, wobei die Strahlengänge unter verschiedenen Einfallswinkeln durch den gemeinsamen Bandpassfiller geleitet werden mit einer Verstellvorrichtung für den Einfallswinkel wenigstens eines Strahlenganges wo hingegen die Einfallswinkel der anderen Strahlengänge konstant bleiben, Fotodetektoren in den Strahlengängen zum quantitativen Messen des durch den gemeinsamen Bandpassfilter gelangten Lichtes der Strahlengänge, und einer Datenverarbeitungseinrichtung zum Empfangen von Messsignalen der Fotodetektoren.

Der Erfindung liegt der Gedanke zugrunde, dass nicht mehrere, in den jeweiligen Strahlengängen vorgesehene Filter einzeln gekippt werden, sondern die Strahlengänge unter verschiedenen Winkeln durch ein gemeinsames Filter geleitet werden. Hierdurch wird bereits eine deutliche Vereinfachung des Aufbaus und eine Kostenreduzierung erreicht.

Weiterhin können der gemeinsame Filter und ergänzend verwendete Bündelungseinrichtungen, zum Beispiel Gradientenindexlinsen, in einem gemeinsamen Block untergebracht werden, so dass Fehler auf Grund zum Beispiel unterschiedlicher Filtereigenschaften oder unterschiedlicher Winkeleinstellungen sowie Stabilitätsprobleme minimal gehalten werden.

Erfindungsgemäß kann insbesondere eine breitbandige Lichtquelle, wie zum Beispiel eine kantenemittierende Leuchtdiode oder eine Superlumineszenzdiode ohne Stabilitätsprobleme verwendet werden mit Linienbreiten von zum Beispiel 50 bis 100 nm ohne interne Strom- und Temperaturstabilisierung

Das Licht wird einem oder mehreren Interferometersensoren beziehungsweise polarimetrischen Sensoren zugeführt, was zum Beispiel durch eine geeignete Kopplungseinrichtung, zum Beispiel eine 4x4-, drei 2x2- oder eine 3x1- und eine 2x2-Kopplungseinrichtung erreicht werden kann. Das von dem Sensor beziehungsweise den Sensoren zurückgestrahlte Licht wird über die Kopplungseinrichtung in mindestens zwei, vorteilhafterweise drei Strahlengänge unterteilt und dem gemeinsamen Filter zugeführt, das vorteilhafterweise in einem Filterblock vorgesehen ist, der eine feste Aufnahme der zugeführten Glasfasern und genaue Justierung der Bündeleinrichtungen ermöglicht.

Als optisches Bandpassfilter kann neben einem Interferenzfilter auch ein Fabry-Perot-Etalon verwendet werden. Bei Vermessung mittels Interferometer-Sensoren kann insbesondere ein arctan-Verfahren zur Ermittlung einer Phasendifferenz verwendet werden. Hierfür kann insbesondere eine Quadraturbeziehung der Messsignale eingestellt werden. Die Bestimmung der Wellenlänge eines Bragg-Reflektor-Sensors kann über den Quotienten der Messsignale erfolgen.

Erfindungsgemäß kann insbesondere eine Lichtquelle ohne Kühlung verwendet werden. Um die Veränderung der Lichtleistung und Abstrahlcharakteristik der Lichtquelle auf Grund der Temperaturänderung zu kompensieren, kann hierzu erfindungsgemäß die Stromzuführung derartig geändert werden, dass zumindest eine weitgehende Kompensation erreicht wird. Hierzu kann als Messfühler zum Beispiel ein NTC-Transistor in einer geeigneten Verstärkerschaltung verwendet werden. Somit ist die beim Stand der Technik erforderliche aufwendige Peltier-Kühlung nicht mehr notwendig, was zu einer weiteren Kostenverringerung und Vereinfachung des Aufbaus führt.

Erfindungsgemäß können insbesondere drei Strahlengänge verwendet werden, die unter unterschiedlichen Einfallswinkeln auf das optische Bandpassfilter eingestrahlt werden. Hierbei wird vorteilhafterweise die mittlere Mittenwellenlänge durch Verkippung des Einfallswinkels verändert, wobei eine symmetrische Anordnung der unteren und oberen Wellenlänge mit gleichen Abständen zu der mittleren Mittenwellenlänge angestrebt wird. Neben der relativen Phasenänderung (ab dem Einschaltzeitpunkt des Gerätes) kann das Interferenzsignal erfindungsgemäß als Option im Hinblick auf die im Signal enthaltene Information zur absoluten (Anfangs-) Phasenlage ausgewertet werden. Dies vereinfacht die Initialisierung der Demodulation (Eingabe der anfänglichen Interferenzstreifenordnung bei Abweichung vom Quadraturwert) und ist hilfreich beim Anschluss mehrerer Sensorenelemente an das Gerät. Hierfür eignet sich eine schrittweise Wellenlängenverstimmung der mittleren der drei Wellenlängen bei gleichzeitiger Analyse der gemessenen Signale oder alternativ ein in das Gerät integriertes Referenzinterferometer. Das Interferenzsignal wird bei der letzten Variante mittels eines faseroptischen Schalters vor dem Einkoppeln in die optische Bandpassfiltereinheit zu einem Referenzinterferometer verzweigt.

Erfindungsgemäß kann das Gerät vorteilhafterweise zur Reduzierung der Kosten beim Einsatz mehrerer Sensorelemente (wo ansonsten für jeden Sensor eine Demodulationseinheit eingesetzt wird) um einen elektronisch umschaltbaren faseroptischen Schalter (wie sie in der Telekommunikation üblich sind) in einem der optischen Ausgänge ergänzt werden, der ein Umschalten (Multiplexen) zwischen 2 bis 16 Sensorelementen erlaubt. Diese Erweiterung erfolgt vorteilhafterweise in Kombination mit Initialisierungsverfahren.

Die Erfindung wird im Folgenden anhand der beiliegenden Zeichnungen an einigen Ausführungsformen näher erläutert. Es zeigen:

**Figur 1**      den Aufbau einer Ausführungsform einer erfindungsgemäßen Vorrichtung;

**Figur 2**      den beispielhaften Aufbau einer erfindungsgemäßen Kompensations-Schaltung zur Stromzuführung zu der Lichtquelle;

**Figur 3**      ein Beispiel eines Spektralverlaufs des Spektrums der Lichtquelle und der Transmissionsspektren der optischen Bandpasseinrichtung für die verschiedenen Strahlengänge;

**Figur 4**      einen Teil einer erfindungsgemäßen Vorrichtung gemäß einer weiteren Ausführungsform mit der optischen Bandpasseinrichtung, Strahlenzuführung und Messeinrichtungen;

**Figur 5**      eine zu Figur 1 alternative weitere Ausführungsform;

**Figur 6**      eine zu Figur 1 alternative Ausführungsform mit drei 2x2-Kopplern;

**Figur 7**      eine weitere Alternative zu Figur 1 mit drei 2x2-Kopplern;

**Figur 8**      eine weitere Alternative zu der Ausführungsform von Figur 1 mit faseroptischem Schalter zum Umschalten zwischen 2 bis 16 Sensorelementen;

**Figur 9**      eine weitere Ausführungsform der Erfindung;

**Figur 10**      eine weitere Ausführungsform der Erfindung;

**Figur 11**      **eine weitere Ausführungsform der Erfindung;**

**Figur 12**      den Wellenlängenverlauf bei einer Bragg-Wellenlängendemodulation gemäß einer Ausführungsform der Erfindung;

**Figur 13**      eine Ausführungsform mit einem Referenzinterferometer und faseroptischem Schalter zum Umschalten zwischen optischer Bandpasseinrichtung (Filterblock) und Referenzinterferometer.

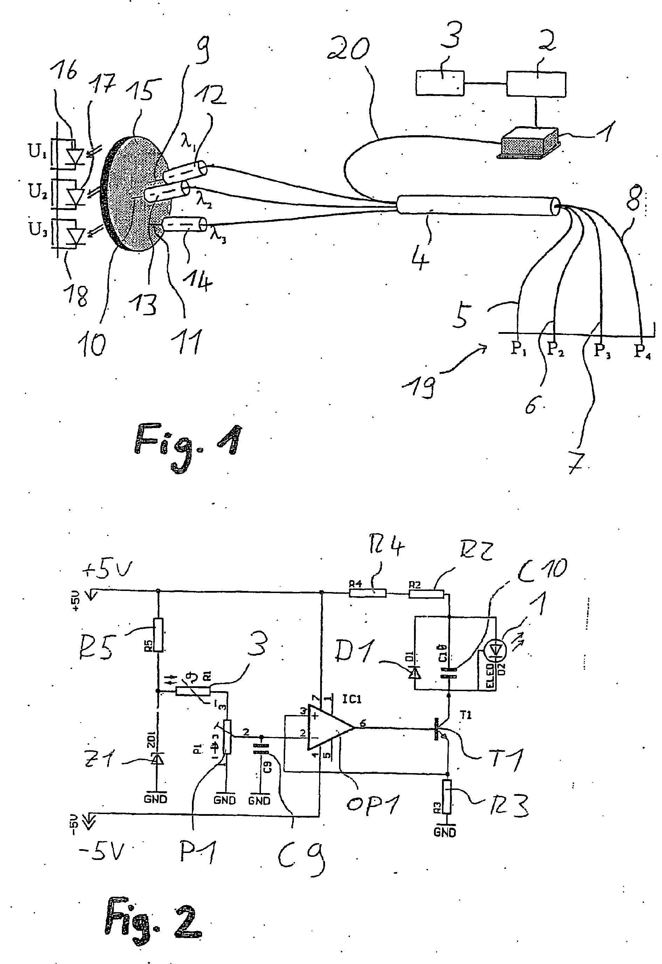

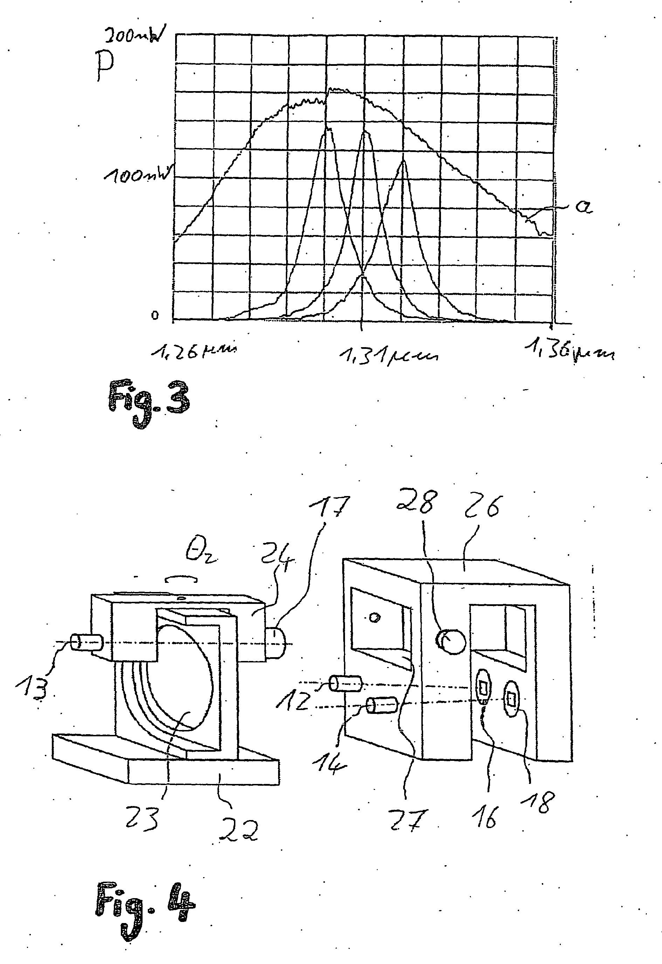

Gemäß **Figur 1** wird eine Lichtquelle 1, zum Beispiel eine kantenemittierende Leuchtdiode ELED mit Linienbreiten von zum Beispiel 100 nm oder einer Superlumineszenzdiode mit einer Linienbreite von 15 bis 40 nm, zum Beispiel im infraroten Spektralbereich mit Wellenlängen von 800 bis 1500 nm verwendet. In Figur 3 ist hier beispielhaft der Spektralverlauf, in Abhängigkeit der Wellenlänge in der Kurve a gezeigt,

Der Lichtquelle 1 wird von einer Stromquelle 2 Strom zugeführt. Ein Temperaturfühler 3 misst hierbei die Temperatur im Gehäuseinneren, wobei die gemessene Temperatur an die Stromquelle 2 weitergegeben wird.

Das von der Lichtquelle 1 ausgegebene Licht wird über einen Lichtleiter 20 zu einem 4x4-Koppler 4 geführt. Der Koppler kann in an sich bekannter Weise durch Verwendung verschmolzener Glasfasern ausgebildet sein. Aus dem Koppler 4 werden vier Lichtleiter 5, 6, 7 herausgeführt, von denen zum Beispiel einer mit einem Sensor 19 an einem der optischen Anschlüsse die P1, P2, P3, P4 verbunden ist. Dieser Sensor kann interferometrisch, polarimetrisch oder Bragg-Reflektor-Sensor sein, der mit den optischen Fasern 5, 6, 7, 8 über optische Anschlüsse verbunden ist. Das von dem Sensor wieder ausgesandte Licht wird zurück über die optischen Fasern 5, 6, 7, 8, den Richtkoppler 4 und über Kopplerarme 9, 10, 11 zu als Bündeleinrichtungen wirkende Gradientenindexlinsen 12, 13, 14 führt. Diese zum Beispiel als Selfoc-Linsen ausgebildeten Linsen leiten das Licht jeweils unter verschiedenen Einfallswinkeln $\vartheta_1$, $\vartheta_2$, $\vartheta_3$ auf einen optischen Bandpassfilter 15. Die von dem Bandpassfilter 15 durchgelassene Strahlung wird jeweils von einem Photodetektor, zum Beispiel einer Photodiode 16, 17, 18 aufgenommen. Als Messgröße kann hierbei jeweils eine Ausgangsspannung U1, U2, U3 gemessen werden.

Der optische Bandpassfilter kann zum Beispiel ein Interferenzfilter oder ein Fabry-Perot-Etalon sein.

Der Temperaturfühler kann zum Beispiel ein Thermoelement oder ein NTC-Widerstand sein.

**Figur 2** zeigt ein Beispiel einer Treiberschaltung für die Leuchtdiode 1, bei der mit Hilfe des Operationsverstärkers OP1 die Treiberschaltung der ELED1 derart kompensiert wird, dass der Intensitätsabfall und die Wellenlängenverschiebung durch Erhöhung der Stromstärke kompensiert wird. Hierbei sind R1, R2, R3, R4 geeignete ohmsche Widerstände, Z1 eine geeignete Zenerdiode, 3 ein NTC-Widerstand, P1 ein geeignetes Potentiometer, C9, C10 geeignete Kondensatoren, D1 eine geeignete Diode und P1 ein geeigneter Transistor. Als Versorgungsspannungen können zum Beispiel -5 Volt und + 5 Volt gewählt werden.

Bei den algorithmischen Berechnungsverfahren müssen die relativen Transmissionsamplituden der drei Filtercharakteristiken beziehungsweise das Verhältnis der Flankensteilheiten konstant bleiben. Um dies trotz der mit der Diodenstromänderung verbundenen Verschiebung des Maximums des ELED-Spektrums zu höheren Wellenlängen zu gewährleisten, liegen vorteilhafterweise die Filter-Mittenwellenlängen $\lambda_F$ durch Wahl geeigneter Winkel $\vartheta_1, \vartheta_2, \vartheta_3$ auf der langwelligen Flanke des ELED-Spektrums, wie in Figur 3 gezeigt ist.

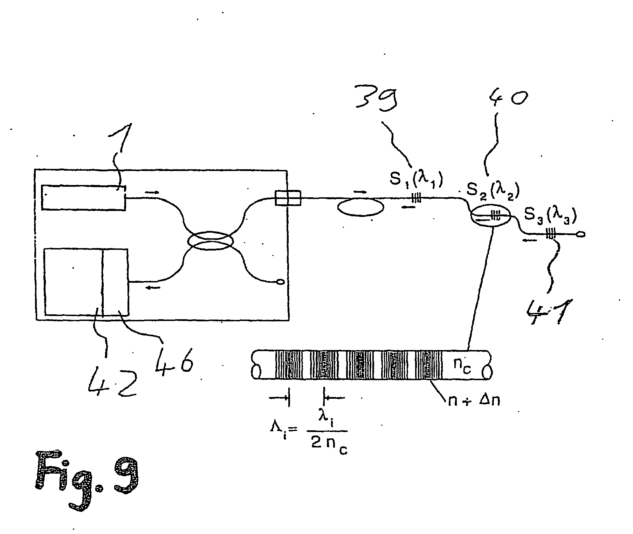

Für die Phasendemodulation bei Interferenzsensoren mittels der arctan-Prozedur müssen die Wellenlängenabstände der kleineren Wellenlänge $\lambda_1$ und der größeren Wellenlänge $\lambda_3$ zu der mittleren Wellenlänge $\lambda_2$ derartig liegen, dass $\lambda_1(\vartheta_1)-\lambda_2(\vartheta_2)=\lambda_2(\vartheta_2)-\lambda_3(\vartheta_3)$ gilt. Für die Bragg-Wellenlängendemodulation muss der Schnittpunkt der (linearen) Flanken der Spektren von zwei Transmissionscharakteristiken in der Nähe der Bragg-wellenlänge $\lambda_B$ liegen, wie beispielhaft in Figur 9 gezeigt. Erfindungsgemäß ist hierfür mindestens eine der Linsen 12, 13, 14 bezüglich ihres Winkels zur Filternormalen verstellbar.

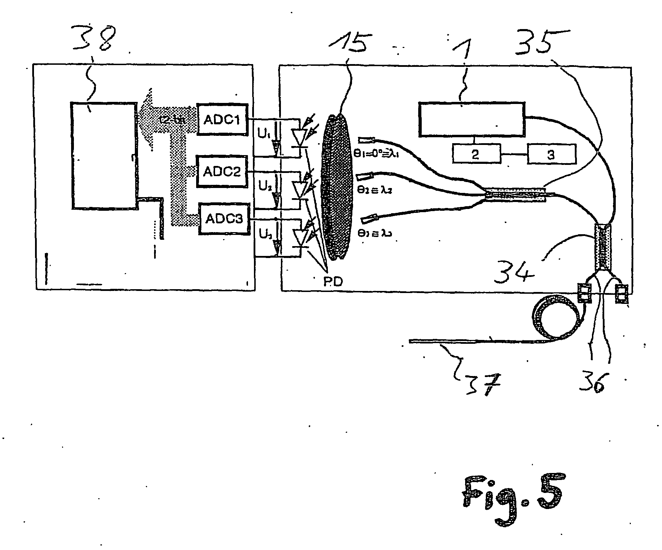

Eine Anordnung zur Aufnahme eines Bandpassfilters, der Gradientenindexlinsen sowie der dazugehörigen Photodioden und zur Winkelverstellung eines der drei Lichtbündel durch das Filter ist in **Figur 4** beispielhaft gezeigt. Eine Filterhalterung 22 mit einer runden Öffnung 23 zur Aufnahme des Filters 15 weist einen drehbaren Anker 24 zur Aufnahme einer Gradientenindexlinse 13 und der dazugehörigen Photodiode 17 auf. Ein Gehäuseblock 26 weist eine durchgehende Öffnung 27 zur Aufnahme des Ankers 24 auf. Der Gehäuseblock 26 kann auf den Sockel der Filterhalterung 22 derartig gestellt werden, dass die Gradientenindexlinsen 12, 14 angeschlossen werden können und der Strahlengang von den Linsen 12, 14 zu den entsprechenden Photodioden 16, 18 durch den Bandpassfilter 15 verlaufen.

Hierbei kann ein Winkel $\vartheta_2$ zur Flächennormale des Bandpassfilters 15 verstellt werden, wo hingegen die Einstellwinkel der Dioden 12, 14 konstant bleiben.

Hierbei sind die Winkel $\vartheta_1, \vartheta_2, \vartheta_3$ bezüglich der Flächennormalen des Filters 15 unterschiedlich, sodass die effektive Wellenlänge $\lambda_F$ von $(\vartheta_i)$ hinter dem Filter für jedes Lichtbündel etwas niedriger als $\lambda_F$ ist.

Die Verstellung des Ankers 24 in Figur 4 kann beispielsweise über eine Verstellvorrichtung 28, die zum Beispiel als Feingewinde-Mikrometerschraube mit entsprechender Skalierung oder als Mikrokontroller-gesteuerter Schrittmotor ausgebildet ist, vorgenommen werden. Hierdurch ist eine quantitativ reproduzierbare Wellenlängenverstellung möglich.

Bei der in **Figur 5** gezeigten Ausführungsform ist anstelle des in Figur 1 gezeigten 4x4-Kopplers eine Kombination eines 2x2-Kopplers 34 und eines 3x1-Kopplers 35, vorgesehen. An den Ausgangsarmen 36 des Kopplers 34 ist als Sensor zum Beispiel ein Mikrointerferometer-Dehnungssensor 37 angeschlossen. Die höhere Komplexität dieser photonischen Schaltung durch Verwendung von zwei Richtkopplern anstelle eines Kopplers von Figur 1 wird durch den Vorteil der höheren Nutzintensität der in das Filter eintretenden Lichtbündel 12, 13, 14 aufgewogen: 1/12 der in den Koppler 34 von der Lichtquelle 1 eingekoppelten und vom Sensor 37 reflektierten Intensität anstelle $1/4 \cdot 1/4 = 1/16$ im Fall von Figur 1. Anstelle des in Figur 1 gezeigten 4x4-Kopplers oder der in Figur 5 gezeigten 2x2- und 3x1-Koppler lässt sich auch eine geeignete Kombination von zum Beispiel drei 2x2-Kopplem einsetzten.

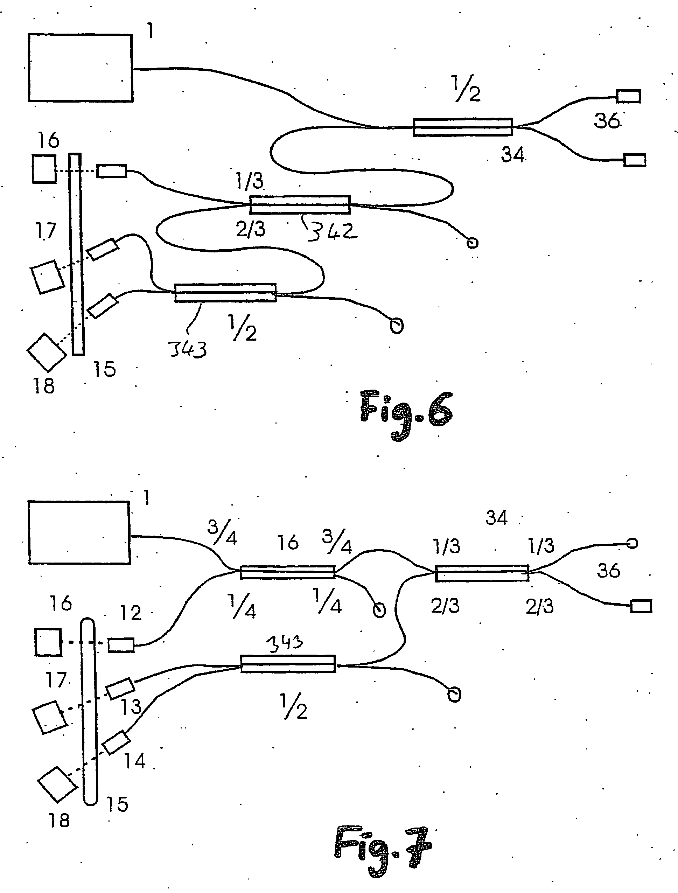

Bei der in **Figur 6** gezeigten Ausführungsform ist die in Figur 1 gezeigte photonische Schaltung mit einem 4x4-Koppler 34 bzw. die in Figur 5 gezeigte Ausführungsform mit 2x2- und 1x3- (bzw. 3x3-) Koppler durch eine Kombination aus drei 2x2-Richtkopplem ersetzt. Sie sind bezüglich ihrer Koppelverhältnisse so spezifiziert, dass die in den optischen Bandpassfilter eintretenden Lichtintensitäten maximiert und für alle drei Kanäle gleich sind (Kopplerverhältnis 1:1, 1:2, 1:1): wie in der photonischen Schaltung von Figur 5 beträgt die Lichtleistung der in den optischen Bandpassfilter eingestrahlten Lichtbündel 1/12 der in Koppler 34 von Quelle 1 eingekoppelten und von dem Sensorelement reflektierten Intensität. Die gegenüber Figur 5 nochmals erhöhte Komplexität der photonischen Schaltung wird durch den üblicherweise geringeren Preis der 2x2-Koppler und die bessere Verfügbarkeit im Vergleich zu den 3x3-Kopplern aufgrund der breiten Anwendung im Telekom-Bereich aufgewogen.

**Figur 7** zeigt eine weitere Variante einer photonischen Schaltung mit drei 2x2-Richtkopplem unterschiedlicher Koppelverhältnisse bei Maximierung der für die drei Kanäle gleichen Ausgangsintensität (Koppelverhältnisse 1:3, 1:2, 1:1): Ausgangsleistung wiederum 1/12 der in Koppler 34 von Quelle1 eingekoppelten und von dem Sensorelement reflektierten Leistung.

Die in Figur 5 gezeigte Datenverarbeitungseinrichtung ist für alle Ausführungsformen geeignet. Ein Microcontroler 38 wandelt die Ausgangsspannungen U1, U2, U3 der Photodetektoren über Analog-Digital-Wandler ADC1, ADC2, ADC 3 in Digitalsignale um. In dem Microcontroler sind für die verschiedenen Sensortypen, das heißt insbesondere Mikrointerferometer, Bragg-Reflektor-Sensoren unterschiedliche Demodulationsalgorithmen implementiert.

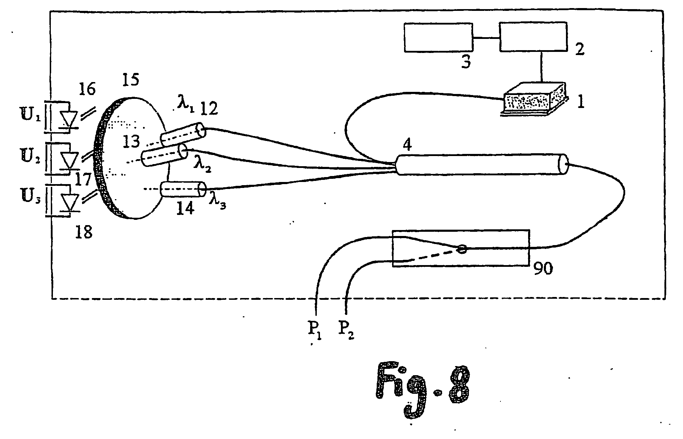

**Figur 8** zeigt eine Anordnung mit einem elektronisch ansteuerbaren faseroptische Umschalter 90 in einem der vier Ausgangsarme von Richtkoppler 4 (nur ein Ausgangsarm ist gezeigt) zur alternativen Auslegung von zwei an die Demodulationseinheit angeschlossenen Sensorelementen an P1, P2, wobei beispielhaft die photonische Schaltung in Figur 5 herangezogen wurde. Umschalter mit bis zu 16 Ausgangskanälen sind z. Z. verfügbar, so dass ein Multiplexbetrieb mit entsprechend vielen Sensoren möglich ist. Der elektronisch ansteuerbare Umschalter wird vorteilhaft über den Microcontroller der Demodulationseinheit aktiviert, kann aber auch durch einen manuell ausgelösten elektrischen Impuls zwischen den Kanälen P1, P2 hin- und hergeschaltet werden.

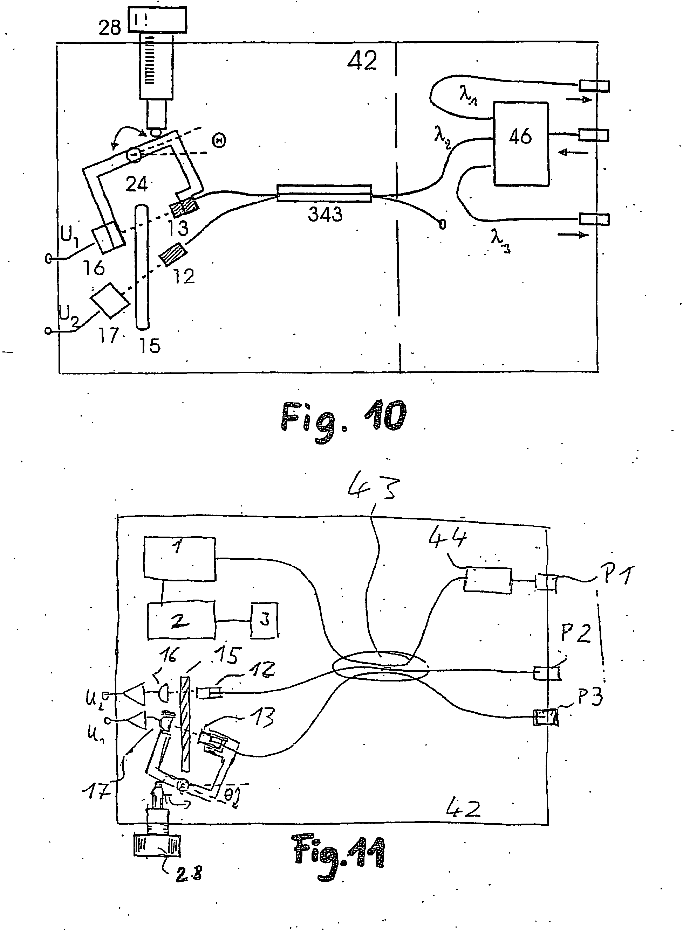

Gemäß Figur 9 sind mehrere Bragg-Reflektor-Sensoren 39, 40, 41 in Reihe geschaltet, die unterschiedliche Braggwellenlängen $\lambda_1$, $\lambda_2$, $\lambda_3$ aufweisen. Als Demodulationseinheit 42 können zum Beispiel ein oder mehrere der in Figur 4 gezeigten Vorrichtungen in Kombination mit einem geeigneten, vorgeschalteten Richt-Koppler wie zum Beispiel 35 verwendet werden. Zur Bragg-Reflektor-Auslesung werden allerdings nur zwei der drei Signale benötigt, da die Demodulation vorzugsweise auf der normierten Differenz von zwei Signalen beruht $(U_1-U_2)/(U_1\pm U_2)$. Entsprechend reduzierte Ausführungsformen der optischen Schaltung von Figur 1 sind in den Figuren 7 und 8 gezeigt. Eine dieser ZweiKanal-Einheiten ist pro Sensor erforderlich. Die Verzweigung eines bestimmten Sensorsignals zu einer dieser Einheiten erfolgt über einen vorgeschalteten Wellenlängenmultiplexer bzw. eine Filteranordnung 46 (s. a. Fig. 10).

Die Wellenlängendemodulation von Bragg-Reflektor-Sensoren kann mit derselben optoelektronischen Einheit durchgeführt werden, die bei der Phasendemodulation von Mikrointerferometem oder polarimetrischen Sensoren zum Einsatz kommt. Für eine intensitätsunabhängige Wellenlängenbestimmung reichen pro Sensorelement bereits zwei Kanäle, da nur zwei Unbekannte zu ermitteln sind (Intensität, Wellenlänge). Pro Sensorelement reichen deshalb zwei Kanäle zur Bestimmung des Absolutwerts der Wellenlänge. Zwei Ausführungsformen von Zweikanal-Demodulationseinheiten sind in der Figur 7 und 8 gezeigt.

Auf das Prinzip der Wellenlängendemodulation mittels Filtern wird im weiteren Text näher eingegangen.

**Figur 10** zeigt eine Ausführungsform für die Auslesung eines Bragg-Reflektors mit einer Wellenlängendemodulationseinheit mit zwei Kanälen für Ausgangssignale $U_1$, $U_2$. Der Wellenlängenmultiplexer 46 erlaubt die Auftrennung von Signalen mehrerer Bragg-Reflektoren unterschiedlicher Mittenwellenlänge $\lambda_i$ (nach Figur 9) zu jeweils eigenen Demodulationseinheiten 42.

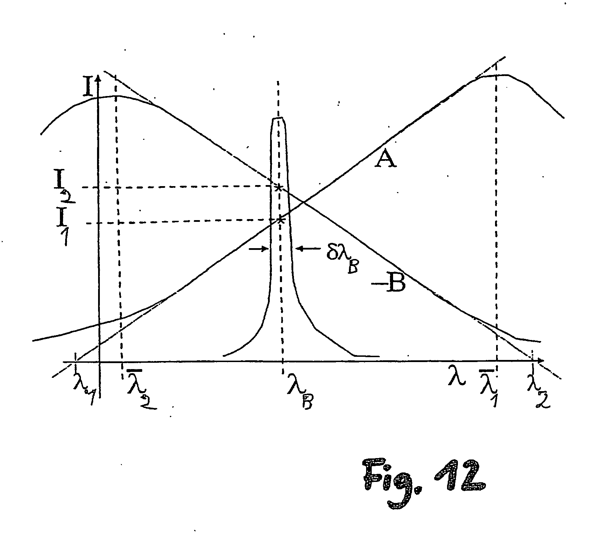

In **Figur 11** ist eine Ausführungsform für einen einzigen Bragg-Reflektor-Sensor mit Lichtquelle 1, 3x3 Richtkoppler 43, Bandpassfilter 15, das beispielsweise als Etalon ausgeführt sein kann, sowie Linsen-Photodiodenpaaren 12, 16 und 13, 17 gezeigt, wobei letzteres in oben beschriebener Weise verkippbar ist. Weiterhin ist ein Lyot-Depolarisator 44 vorgesehen, mit dem eine Reduzierung der Sensorempfindlichkeit auf Grund von Polarisationsaufspaltung des Bragg-Spektrums bei anisotroper Belastung des Bragg-Reflektors kompensiert wird.

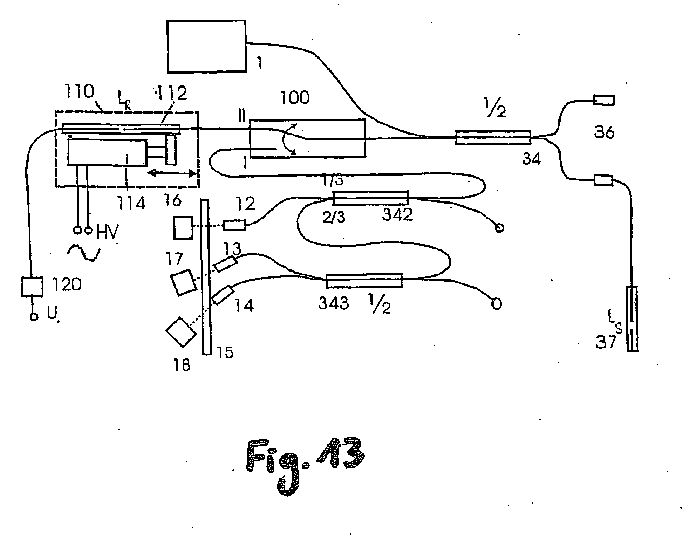

In **Figur 12** sind die spektralen Eigenschaften der Interferenzfilter- beziehungsweise Etalon-Transmissionskurven mit Mittenwellenlängen $\overline{\lambda 1}$, $\overline{\lambda 2}$ Flankensteigungen A,-B und des Bragg-Reflexes (Mittenwellenlänge $\lambda_B$, spektrale Breite $\delta\lambda_B$ (Halbwertsbreite) gezeigt.

Bei einem extrinsischen Fabry-Perot-Mikrointerferometer oder polarimetrischen Sensor, zum Beispiel einem Vibrationssensor oder Dehnungssensor, ist die Phasendifferenz zwischen den beiden interferierenden, reflektierten Lichtwellen in einem Fabry-Perot niedriger Finesse (niedriger Spiegelreflektivität) von der Wellenlänge $\lambda$ abhängig gemäß:

$$\Phi = \frac{4\pi nL}{\lambda}$$

$\Phi$ ist eine Summe aus konstanten Anteil $\Phi_0$ und einem durch eine Messgröße modulierten, üblicherweise wesentlich kleineren Anteil ($\Delta\Phi_m \sim \Delta(nL)$) (wobei Brechungsindex n = 1 für Mikrointerferometer).

$$\Phi = \Phi_0 + \Delta\Phi_m$$

Die Quadraturbedingung wird bei feststehenden Filterwinkeln $\vartheta 1$, $\vartheta 2$, nur für die Ruhephase $\Phi_0$ (Interferometerlänge $L_0$) erfüllt. Auf Grund der Abhängigkeit der Quadraturbedingung von L verändert sich die Phasendifferenz $\Delta\Phi_{12}=\Phi_1-\Phi_2$ mit messgrößeninduzierter Änderung von L gemäß

$$\Delta\Phi_{12}=2\ \frac{2\pi\Delta\lambda n}{\lambda_1\lambda_2}L$$

Die Phasendifferenz der Quadratursignale ändert sich also um den Faktor

$$\frac{\Delta\lambda}{\lambda} \approx 10^{-2}$$

langsamer mit L als die Phase $\Phi$ des einzelnen Interferenzsignals gemäß der obigen Gleichung und kann deshalb bei gleichzeitiger Messung in Ergänzung zur hochauflösenden Phasenmessung als Maß für die absolute Phasenlage und damit zur Initialisierung des Interferometers herangezogen werden. Die Wellenlängendifferenz $\Delta\lambda$ kann durch definierte Einstellung des Winkels $\vartheta_2$ so nachgestellt werden, dass zum Beispiel die Quadraturbedingung erfüllt ist. Die aktuelle Kippwinkeldifferenz zum Anfangswinkel $\vartheta_{20}$ der dem Signal $U_2(\lambda_2)$ zugeordneten Kollimationslinse ist dann das Maß für die absolute Phase beziehungsweise die absolute Abstandsänderung $\Delta L$ in Bezug zum Anfangsabstand $L_0$. Die Phasenberechnung erfolgt mittels bekannter Algorithmen, wobei im Fall der Mikrointerferometer und der polarimetrischen Sensoren im Wesentlichen eine arctan-Funktion zum Einsatz kommt.

Für eine Initialisierung des Sensors nach dem Einschalten kann die zunächst unbekannte Interferenzstreifenordnung m (beziehungsweise die absolute Phase) mit Hilfe eines weiteren, bekannten phase stepping"-Algorithmus ermittelt werden.

$$\tan\alpha/2 = \sqrt{\frac{3[I_2 - I_3] - [I_1 - I_4]}{[I_2 - I_3] + [I_1 - I_4]}}$$

wobei $\alpha$ = Phasenunterschied zwischen jeweils zwei von vier Interferenzsignalen. Zur Ermittlung der vier Intensitäten $I_1$ - $I_4$ wird der bewegliche Anker der Filterhalterung mit der Linsen-Photodiodenkombination 11, 16 vorzugsweise mittels eines Microcontroller-gesteuerten Schrittmotors in vier unterschiedliche Positionen, entsprechend vier unterschiedlichen Phasenverschiebungen $\Delta\Phi_k(\lambda(\Theta_k)) = -3/2\alpha(\lambda_1), -1/2\alpha(\lambda_2), 1/2\alpha(\lambda_3), 3/2\alpha(\lambda_4)$ gefahren, sodass damit diese Gleichung ausgewertet werden kann. Die bis auf die Wellenlängenabhängigkeit konstante Phasendifferenz $\alpha = 4\pi\Delta\lambda\, nL/\lambda^2$ zwischen zwei benachbarten Positionen entspricht einer konstanten Wellenlängendifferenz $\Delta\lambda$. Die Phasendifferenz $\Delta\Phi_{ij}(\Lambda(L))$, (mit $\Lambda = \lambda^2/\Delta\lambda$ =synthetische Wellenlänge) entsprechende Phase $\Phi = m\pi$ (Interferenzordnung m) erlaubt dabei eine eindeutige Bestimmung von L im Bereich der halben synthetischen Wellenlänge $\Lambda/2 \approx 42\ \mu m$.

Eine weitere Möglichkeit zur Absolutwertbestimmung bzw. Initialisierung der Demodulationseinheit nach dem Einschalten mit einer Genauigkeit von etwa einem Interferenzstreifen ($\lambda/2$) ist möglich, wenn das Signal während des hierfür erforderlichen Zeitraums (Größenordnung 1 sec) nicht durch eine Messgröße beeinflusst wird. Grundlage des Verfahrens ist die bekannte Abhängigkeit des spektralen Abstandes von zwei Intensitätsmaxima oder -Minima oder der Breite des quasi-periodischen spektralen Intensitätsverlaufs (gemessen als Funktion der Wellenlänge) von der Interferometerlänge L:

$$I = I_0\, (1 - \mu(L, \lambda)\cos\{\Delta\Phi(L, \lambda)\}$$

mit der Phasenänderung $\Delta\Phi$ und dem Interferenzkontrast $\mu$. Messtechnische Voraussetzung ist demzufolge das schrittweise Aufnehmen des Interferenzsignals mit dem typischen periodischen Intensitätsverlauf über mehr als eine viertel Periode mittels Durchfahren eines hinreichend großen Wellenlängenbereiches durch Verkippen des mittleren Lichtbündels (Wellenlänge $\lambda_2$, beweglicher Anker 24 mit Linie 13 und Photodiode 17 in der Filterhaltung 22) der 3-$\lambda$-Vorrichtung. Dabei ist die Phasenänderung $\Delta\Phi$ bei sich ändernder Wellenlänge $\lambda$ und Anfangswellenlänge $\lambda_0$ entsprechend obiger Gleichung für $\Delta\Phi_{12}$ gegeben durch

$$\Delta\Phi(L, \lambda) = 4\pi L\left(\frac{1}{\lambda} - \frac{1}{\lambda_0}\right)$$

Da der Sensor während des Abfahrens der Wellenlängen nicht angeregt wird, ist der dadurch gewährleistete stabile Abstand L des Interferometers proportional zur Phase $\Delta\Phi$. Die Interferometerlänge (Abstand zwischen den Reflektoren = Resonatorlänge im Fall des Fabry-Perot's) wird entsprechend der obigen Formel für den Phasenabstand

$\Delta\Phi$ (L, λ) für den Fall $\Delta\Phi(\lambda) = 2\pi$ (spektraler Abstand zwischen zwei Interferenzmaxima) bei zwei unterschiedlichen Wellenlängen wie folgt berechnet:

$$L = \frac{\lambda_1 \lambda_2}{2(\lambda_1 - \lambda_2)}$$

Die Wellenlängen $\lambda_1$ und $\lambda_2$ bestimmen somit L. Da in der Praxis der durch Verkippung des $\lambda_2$-Lichtbündels überstreichbare Wellenlängenbereich nicht einen vollständigen Interferenzstreifen mit zwei Maxima ausmacht, wird der vermessene Abschnitt mittels einer für die jeweiligen Quellen-/Filter-Konfiguration charakteristischen, empirisch zu ermittelnden Fitfunktion modelliert (hier beispielhaft mit fünf Fitparametern):

$$I_{fit}(\lambda) = p_0 + p_1\lambda + p_2(\lambda - \lambda_m)^2 + p_3 \sin[4\pi(\frac{p_4}{\lambda} - p_5)]$$

Eine entsprechend gestaltete Software passt dieses Modell iterativ an die gemessenen Werte an: Als erstes wird eine Analyse des spektralen Scans vorgenommen. Dazu werden die Parameter $p_0$, $p_3$, $p_4$ und $p_5$ mit Hilfe der Bestimmung der Extrema abgeschätzt und als Startparameter für die Iteration verwendet. Nun erfolgt die Variation der fünf Parameter zur Bestimmung der minimalen Standardabweichung mittels eines gebräuchlichen least-squares-Algorithmus (Methode der kleinsten Fehlerquadrate). Das 5-Parameter-Modell berücksichtigt dabei in Erweiterung der einfachen Interferometergleichung die spektralen Eigenschaften der Lichtquelle mit näherungsweise Gauß-förmigen Spektrum.

Im Fall von Mikrointerferometer-Dehnungssensoren (EFPI-) ist damit eine Absolutwertmessung mit drift- und rauschbegrenzten Genauigkeiten von der Größenordnung eines Interferenzstreifens (eine Wellenlänge) erreichbar. Dies stellt eine wichtige Ergänzung zur hochauflösenden Phasenmessung mit $\delta L \approx 10$ pm (abhängig von der Bandbreitenbegrenzten Rauschamplitude) dar, deren Startwert auf Grund der $2\pi$-periodischen Interferometercharakteristik (Interferenzordnung m) prinzipiell unbekannt ist.

Eine dritte Variante zur Initialisierung/Absolutwertbestimmung des Interferometerabstandes L ist in Figur 13 gezeigt und beruht auf der Integration eines Referenzinterferometers 112 in der Demodulationseinheit parallel zur optischen Bandpassfiltereinheit, die für den hochauflösenden Messbetrieb erforderlich ist. Das in einem temperaturstabilisierten Gehäuse 110 untergebrachte Referenzinterferometer kann hinsichtlich seiner Länge $L_R$ mittels eines elektrisch angesteuerten piezoelektrischen Translators 114 moduliert werden. In Figur 13 ist das Referenzinterferometer beispielhaft in eine photonische Schaltung nach Figur 6 integriert; der Einbau ist jedoch auch in alle anderen Varianten möglich. Zur Initialisierung bzw. Absolutwertmessung - vor Beginn einer hochauflösenden Messung mit der 3-λ-Methode — wird das Interferenzsignal mittels des elektronisch ansteuerbaren faseroptischen Schalters 100 in das Referenzinterferometer 110 eingekoppelt. Die Phasenmessung und damit die Abstandsbestimmung beruht jetzt auf der bekannten Methode der Weißlichtinterferometrie, wobei sich bei Verwendung einer niedrigkohärenten Lichtquelle mit Kohärenzlänge $L_c$ (im Fall der ELED mit typischer spektraler Breite $\delta\lambda = 100$ nm ist $L_o = \lambda_2/\delta\lambda \approx 17$ μm) aus einem Interferometer mit Interferometerlänge $L_s \geq L_c$ erst dann ein verwertbares Interferenzsignal mit hinreichendem Interferenzkontrast ergibt, wenn die Wegdifferenz $L_s \approx 20$ μm der überlagerten Lichtwellen mittels eines Kompensations-(bzw. Referenz-) Interferometers auf $\Delta L = L_s - L_c < L_c$ reduziert wird. Bei $\Delta L = 0$ ergibt sich wegen gleicher Phasenwerte von Mess- und Referenzinterferometer maximaler Interferenzkontrast

$$\mu(\Phi_R - \Phi_S) = \exp\{-(\Phi_R - \Phi_S)^2(\frac{\delta\lambda}{4\sqrt{\ln 2}\lambda})^2\}$$

Das an dem Referenzinterferometer in Transmission mit der Photodiode 120 gemessene Interferenzsignal ist in Näherung

$$i' = 2R\{1 - R[3 + \mu(\Phi_R - \Phi_S)\cos(\Phi_R - \Phi_S)]\}$$

wobei R im Fall der Mikroferometer-Sensoren die Reflektivität der Quarzglas-Luft-Grenzfläche darstellt ($R \approx 4$ %). Die

Absolutwertbestimmung der Phase $\Phi_S$ bzw. des entsprechenden Interferometerabstands L erfolgt über die Modulation des Referenzinterferometerabstands $L_R$ mittels periodischer Auslenkung des elektrisch angesteuerten Piezotranslators (PZT) 114 zur Ermittlung des Interferenzmaximums bei $\Phi_R = \Phi_S$- Das Mikrointerferometer 112 ist dabei geeignet an zwei Punkten des PZT fixiert, so dass sich die PZT-Auslenkung identisch auf das Interferometer und damit den Abstand $L_R$ überträgt. $L_R$ wird dabei kalibriert im Vergleich zu der üblicherweise mittels elektrischem Dehnungsmessstreifen gemessenen Piezoauslenkung. Das Maximum des Interferenzsignals bei $\Phi s = \Phi_R$ (maximaler Interferenzkontrast) erlaubt somit die Bestimmung von $L_s$ entsprechend der Genauigkeit der Kalibrierung des Referenzinterferometers und der Genauigkeit der Bestimmung des Maximums (zum Beispiel durch Anpassen einer geeigneten Funktion mittels least-squares-Verfahren) - üblicherweise begrenzt durch die spektralen Eigenschaften der Quelle und Phasenrauschen.

Weiterhin kann ein vollständiges Sensorsystem mit drei Bragg-Reflektor-Sensorelementen unterschiedlicher Reflexionswellenlänge in einer Faser, einer SLD oder ELED-Lichtquelle sowie einer Demodulationseinheit zur Erzeugung der jeweils mindestens zwei Signale pro Sensorelement.

Die Wellenlängendemodulation von Bragg-Reflektor Sensoren kann mit derselben optoelektronischen Einheit durchgeführt werden, die bei der Phasendemodulation von Mikrointerferometern oder polarimetrischen Sensoren zum Einsatz kommt. Für eine intensitätsunabhängige Wellenlängenbestimmung reichen pro Sensorelement bereits zwei Kanäle, da nur zwei Unbekannte zu ermitteln sind (Intensität, Wellenlänge). Pro Sensorelement reichen deshalb zwei Kanäle zur Bestimmung des Absolutwerts der Wellenlänge. Zwei Ausführungsformen von Zweikanal-Demodulationseinheiten sind in Figuren 10 und 11 gezeigt.

Das Prinzip der Wellenlängendemodulation mittels Filtern beruht auf der Differenz- und Verhältnisbildung der Bragg-Reflektor Intensitäten nach Durchgang durch zwei Kantenfilter (mit Hoch- und Tiefpass), deren Kanten bezüglich der Wellenlänge nach oben und unten gegenüber der Bragg-Wellenlänge

$$\lambda_B = 2n_{eff}\Lambda$$

verschoben sind, A = Bragg-Periode und $n_{eff}$ = effektiver Brechungsindex des Faserkerns. Auch schmalbandige Interferenz-(Bandpass-)filter sind verwendbar, jedoch aufgrund ihrer inneren Substrat-Schichtstruktur in Verbindung mit der hohe Kohärenzlänge nicht so vorteilhaft. Aufgrund der hohen Sensorkohärenzlänge $\lambda_2/\delta\lambda_B$ werden hier anstelle von Standard-Interterenzfiltern (die zu Störinterferenzen führen) Fabry-Perot-Etalons als Bandpassfilter eingesetzt. Die spektralen Gegebenheiten betreffend Filter und Bragg-Reflektor sind in Figur 12 gezeigt.

Für die praktische Realisierung der Wellenlängendemodulation sind zwei Randbedingungen zu berücksichtigen.

a) Filterbandbreite $\delta\lambda_F$ ist groß im Vergleich zur Bragg-Reflektor-Bandbreite $\delta\lambda_B$ (volle Linienbreite bei halber Höhe, fwhm) und erlaubt eine hinreichende Variation $\Delta\lambda_B$ der Bragg-Mittenwellenlänge $\lambda_B$ mit den relevanten Messgrößen (Dehnung, Temperatur);
b) die Filter-(Etalon-)Kennlinie hat einen hinreichend großen linearen Bereich ($>>\delta\lambda_B$).

Als Maß für die Bragg-Reflektor Mittenwellenlänge wird die normierte Intensitätsdifferenz

$$S(\lambda_B) = \frac{u_1 - u_2}{u_1 + u_2}$$

genommen. Hierbei ist $u_i$, i=1,2 die zur normierte Intensität proportionale Ausgangsspannung der Empfangseinheit $u = \kappa\, I_F\, /\, R\, I_0$. Die spektrale Linienform des Bragg-Reflektors kann zum Beispiel durch eine Gauß-Charakteristik mit der Standardabweichung $\sigma$ $\sigma_B = \delta\lambda_B/(2\sqrt{(2\ln 2)})$, $\delta\lambda_B$ = spektrale Breite bei halbem Maximum (fwhm), angenähert werden:

$$I_B(\lambda) = kRI_0 \exp\left\{-\left(\frac{\lambda - \lambda_B}{\sqrt{2}\sigma_B}\right)^2\right\}$$

mit dem Normierungsfaktor $k = 1/\sqrt{2\pi}\sigma_B$ . Für die linearen Bereiche der zwei Filter- bzw. Etalon-Kennlinien

$$F_1(\lambda) = A(\lambda - \lambda_{01})$$

$$F_2(\lambda) = -B(\lambda - \lambda_{02})$$

ergibt sich hieraus unter der Annahme gleicher Steigungen (A=B) als Sensorkennlinie die folgende Abhängigkeit des Ausgangssignals von der Bragg-Reflektor-Mittenwellenlänge $\lambda_B$.

$$S = \frac{\lambda_B - \overline{\lambda}_F + \sigma_B}{\Delta\lambda_F/2}$$

Hierbei ist $\lambda_F = (\lambda_{01} + \lambda_{02})/2$ der Mittelwert der beiden Filter-Mittenwellenlängen und $\Delta\lambda_F = \lambda_{02}-\lambda_{01}$. Bei Verwendung des normierten Ausgangssignals ist die Sensorempfindlichkeit also um so größer, je kleiner der Abstand $\Delta\lambda_F$ der Filter-Mittenwellenlänge ist. Durch Einstellung des Schnittpunkts der linearen Filterabschnitte auf $\lambda_B$ und Nachregelung mittels Verstellvorrichtung lässt sich eine aktive Arbeitspunktstabilisierung realisieren (closed-loop Betrieb).

Bei Bragg-Reflektor-Sensoren und Fabry-Perot-Mikrointerferometem hoher Finesse nimmt mit der Abnahme der spektralen Interferenzsignal-Breite (Bragg-Reflektor typischerweise $\delta\lambda_B \approx 0,3$ nm) die Kohärenzlänge zu. Dies führt beim Einsatz eines handelsüblichen Interferenzfilters als optischem Bandpass, bedingt durch dessen schichtförmigen Substrataufbau, zu Störinterferenzen in Form von Modulationen auf der Filtercharakteristik. Eine Lösung des Problems besteht im Einsatz eines Fabry-Perot-Etalons als Bandpass, da dieses aus einer Einzelschicht mit verspiegelten Endflächen besteht. Aufgabe ist eine geeignete Dimensionierung für die hier benötigte Anwendung, die in der Erzeugung von mindestens zwei korrelierten Signalen unterschiedlicher Intensität besteht, aus denen mittels Verrechnung ein zur Bragg-Wellenlänge proportionales Signal erzeugt wird.

Die Phasenverschiebung im Etalon ist gegeben durch

$$\delta = \frac{4\pi}{\lambda} n' h \cos\Theta'$$

wobei h = Etalon-Dicke (Abstand zwischen den verspiegelten Flächen), n' = Brechungsindex des Materials im Etalon, $\Theta$ = Einfallswinkel des eintretenden (gebrochenen) Strahls im Etalon. Transmissionsmaxima ergeben sich bei $\delta$ = N $2\pi$, woraus sich N = 2nh cos$\Theta/\lambda \approx 2,310^3$ (für h= 1 mm und $\Theta$ = 0° = senkrechte Inzidenz) ergibt. Entsprechend Figur 1 sollte der spektrale Abstand $\Delta\gamma_{2\pi}$ zwischen zwei Maxima bei N und N+1

$$\Delta\lambda_{2\pi} = 2n'h\cos\Theta'\left(\frac{1}{N} - \frac{1}{N+1}\right) \approx \frac{\lambda^2}{2n'h}\cos\Theta$$

möglichst groß sein, jedenfalls größer als die Bragg-Linienbreite $\delta_B \approx 0,3$ mm und der Abstand der Etalon-Mittenwellen-

längen $\lambda_1(\Theta_1 = 0°)$, $\lambda_2(\Theta'_2)$. Für h = 1 mm bzw. h = 0,1 mm ergibt sich $\Delta\lambda_{2\pi}$ = 0,57 nm bzw. 5,7 nm. Das heißt eine (handelsübliche) Etalon-Dicke (Abstand zwischen den Spiegeln) von h ≤ 0,1 mm ist für unsere Zwecke geeignet. Der Durchstimmbereich der Transmissionswellenlänge für einen maximalen Winkel $\Theta'= \Theta_{max}$ = 20° beträgt

$$\Delta\lambda_\Theta = \frac{2n'h}{N}\left(\cos(0) - \cos(\Theta)\right) = \lambda\left(1 - \cos 20°\right) \approx 45 \text{ nm}.$$

**Bezugszeichenliste**

| | |
|---|---|
| 1 | Lichtquelle |
| 2 | Stromversorgung |
| 3 | Temperaturfühler |
| 4 | 4x4-Koppler |
| 5 | Lichtleiter |
| 6 | Lichtleiter |
| 7 | Lichtleiter |
| 8 | Lichtleiter |
| 9 | Strahlengang |
| 10 | Strahlengang |
| 11 | Strahlengang |
| 12 | Selfoc-Linse |
| 13 | Selfoc-Linse |
| 14 | Selfoc-Linse |
| 15 | optischer Bandpassfilter |
| 16 | Photodiode |
| 17 | Photodiode |
| 18 | Photodiode |
| 19 | Sensoranordnung |
| 22 | Filterhalterung |
| 23 | Öffnung |
| 24 | Anker |
| 25 | Photodiode |
| 26 | Gehäuseblock |
| 27 | durchgehende Öffnung |
| 28 | Verstellvorrichtung |
| 34 | 2x2-Koppler |
| 35 | 3x1-Koppler |
| 36 | Ausgangsarm |
| 37 | Dehnungssensor |
| 38 | Microcontroler |
| 39 | Bragg-Sensor |
| 40 | Bragg-Sensor |
| 41 | Bragg-Sensor |
| 42 | Demodulationseinheit |
| 43 | 3x3-Richtkoppler |
| 44 | Lyot-Depolarisator |
| 46 | Wellenlängenmultiplexer |

**Patentansprüche**

1. Verfahren zum Durchführen interferometrischer Messungen, bei dem Licht einer Interferometersensoreinrichtung oder polarimetrischen Sensoreinrichtung (19) oder einer wellenlängenmodulierten Sensoreinrichtung zugeführt wird, das von der Interferometersensoreinrichtung oder polarimetrischenSensoreinrichtung oder wellenlängenmodulierten Sensoreinrichtung abgegebene Licht in mindestens zwei Strahlengänge (9, 10,11) aufgeteilt wird, die unter verschiedenen Einfallswinkeln ($\vartheta 1, \vartheta 2, \vartheta 3$) durch einen gemeinsamen optischen Bandpassfilter (15) geleitet werden, und
die durch den optischen Bandpassfilter gelangten Strahlengänge quantitativ gemessen werden und die Messung in einer Datenverarbeitungseinrichtung ausgewertet wird,
wobei mindestens ein Einfallswinkel eines Strahlenganges (10) verstellbar ist und Messungen bei verschiedenen Werten des Einfallswinkels vomehmbar sind, und wobei die Einfalls wintel der anderen Strahlengänge konstant bleiben.

2. Verfahren nach Anspruch 1 ,
**dadurch gekennzeichnet,**
**dass** eine in dem verstellbaren Strahlengang (10) vorgesehene Bündeleinrichtung (13) und eine dazugehörige optoelektronische Wandlereinrichtung (17) starr gekoppelt verstellt werden.

3. Verfahren nach Anspruch 1 oder 2,
**dadurch gekennzeichnet,**
**dass** eine Umgebungstemperatur einer Lichtquelle (1) gemessen und eine Stromzuführung zu der Lichtquelle bei steigender Temperatur erhöht und bei fallender Temperatur verringert wird.

4. Verfahren nach Anspruch 3,
**dadurch gekennzeichnet,**
**dass** die Stromstärke des der Lichtquelle (1) zugeführten Stromes derartig gesteuert wird, dass eine Lichtleistung und/oder Abstrahlcharakteristik der Lichtquelle zumindest im Wesentlichen konstant gehalten wird.

5. Verfahren nach einem der Ansprüche 1 bis 4,
**dadurch gekennzeichnet,**
**dass** drei Strahlengänge (9, 10, 11) verwendet werden, wobei eine obere Mittenwellenlänge ($\lambda 3$) und eine untere Mittenwellenlänge ($\lambda 1$) von einer mittleren Mittenwellenlänge ($\lambda 2$) den gleichen Abstand haben.

6. Verfahren nach Anspruch 4 oder 5,
**dadurch gekennzeichnet,**
**dass** eine Interferometersensoreinrichtung verwendet wird und aus den Messwerten neben den Phasendifferenzen weiterhin Intensitäten und/oder Interferenzkontraste und/oder Interferenzstreifenordnungen ermittelt werden.

7. Verfahren nach einem der Ansprüche 1 bis 6,
**dadurch gekennzeichnet,**
**dass** eine Interferometersensoreinrichtung verwendet wird und aus Quotienten von mindestens zwei Messwerten eine Phasendifferenz mittels einer arctan-Prozedur ermittelt wird.

8. Verfahren nach einem der vorherigen Ansprüche,
**dadurch gekennzeichnet,**
**dass** über eine spektrale Breite des optischen Bandpassfilters (15) verschiedene diskrete Werte des Einfallwinkels eingestellt werden.

9. Verfahren nach Anspruch 8,
**dadurch gekennzeichnet,**
**dass** die diskreten Werte des Einfallwinkels durch schrittweises Verstellen eines gesteuerten Schrittmotors eingestellt werden.

10. Verfahren nach Anspruch 8 oder 9,
**dadurch gekennzeichnet,**
**dass** durch die Messung über die spektrale Breite des optischen Bandpassfilter (15) eine absolute Phasenlage ermittelt wird.

11. Verfahren nach einem der vorherigen Ansprüche,
**dadurch gekennzeichnet,**
**dass** eine Bragg-Reflektoreinrichtung verwendet wird, deren durch eine Messgröße modulierte Wellenlänge über eine normierte Intensitätsdifferenz ermittelt wird.

12. Vorrichtung zum Durchführen interferometrischer Messungen, insbesondere zur Durchführung eines Verfahrens nach einem der Ansprüche 1 bis 11, mit einer Lichtquelle (1),
einer Interferometersensoreinrichtung (19) oder polarimetrischen Sensoreinrichtung oder wellenlängenmodulierten Sensoreinrichtung,
einer Strahlungsteilereinrichtung (4) zum Aufteilen einer von der Interferometersensoreinrichtung (19) oder polarimetrischen Sensoreinrichtung oder wellenlängenmodulierten Bragg- Sensoreinrichtung abgegebenen Strahlung in mindestens zwei Strahlengänge (9, 10, 11),
einem gemeinsamen optischen Bandpassfilter (15), das in den Strahlengängen (9, 10, 11) angeordnet ist, wobei die Strahlengänge unter verschiedenen Einfallswinkeln durch den gemeinsamen Bandpassfilter geleitet werden
mit einer Verstellvorrichtung (28) für den Einfallswinkel wenigstens eines Strahlenganges (10), wo hingegen die Einfallswinkel der anderen Strahlengänge konstant bleiben
Fotodetektoren (16, 17, 18) in den Strahlengängen zum quantitativen Messen des durch den gemeinsamen Bandpassfilter (19) gelangten Lichtes der Strahlengänge, und
einer Datenverarbeitungseinrichtung zum Empfangen von Messsignalen der Fotodetektoren (16, 17 ,18).

13. Vorrichtung nach Anspruch 12,
**dadurch gekennzeichnet,**
**dass** die Lichtquelle eine Superlumineszenzdiode oder kantenemittierende Leuchtdiode (1) ist.

14. Vorrichtung nach Anspruch 12 oder 13,
**dadurch gekennzeichnet,**
**dass** die Lichtquelle (1) ungekühlt ist.

15. Vorrichtung nach einem der Ansprüche 12 bis 14,
**dadurch gekennzeichnet,**
**dass** die Lichtquelle (1) eine Wellenlänge zwischen 800 und 1.500 nm und eine Linienbreite von 40 nm bis 100 nm aufweist.

16. Vorrichtung nach einem der Ansprüche 12 bis 15,
**dadurch gekennzeichnet,**
**dass** der optische Bandpassfilter (15) ein Interferenzfilter oder ein Fabry-Perot-Etalon ist.

17. Vorrichtung nach einem der Ansprüche 12 bis 16,
**dadurch gekennzeichnet,**
**dass** Bündeleinrichtungen, insbesondere Gradientenindexlinsen, zum Beispiel Selfoc-Linsen (12, 13, 14) zum Bündeln der Strahlengänge (9, 10, 11) vorgesehen sind.

18. Vorrichtung nach Anspruch 17,
**dadurch gekennzeichnet,**
**dass** zumindest eine Bündeleinrichtung (13) und ein dem gleichen Strahlengang (10) zugeordneter Fotodetektor (17) starr miteinander gekoppelt verstellbar sind.

19. Vorrichtung nach einem der Ansprüche 12 bis 18,
**dadurch gekennzeichnet,**
**dass** mindestens ein Interferometer-Sensor, insbesondere ein faseroptischer Fabry-Perot-Mikrointerferometersensor an Anschlüssen (P1, P2, P3, P4) vorgesehen ist, und von der Datenverarbeitungseinrichtung ein arctan-Verfahren zur Ermittlung mindestens einer Phasendifferenz verwendbar ist.

20. Vorrichtung nach einem der Ansprüche 12 bis 19,
**dadurch gekennzeichnet,**
**dass** ein Temperatursensor (3) zum Messen einer Umgebungstemperatur der Lichtquelle (1) vorgesehen ist und eine Stromzuführung von einer Stromquelle (2) zu der Lichtquelle (1) bei steigender Temperatur erhöhbar und bei fallender Temperatur verringerbar ist.

**21.** Vorrichtung nach Anspruch 20,
**dadurch gekennzeichnet,**
**dass** die Stromstärke der Lichtquelle (1) derartig steuerbar ist, dass eine Lichtleistung und/oder Abstrahlcharakteristik der Lichtquelle zumindest im Wesentlichen konstant gehalten wird.

**22.** Vorrichtung nach einem der Ansprüche 12 bis 21,
**dadurch gekennzeichnet,**
**dass** mindestens drei Strahlengänge (9, 10, 11) vorgesehen sind, die durch den optischen Bandpassfilter (15) verlaufen.

**23.** Vorrichtung nach Anspruch 22,
**dadurch gekennzeichnet,**
**dass** eine obere Mittenwellenlänge (3) und eine untere Mittenwellenlänge (1) von einer mittleren Mittenwellenlänge (2) den gleichen Wellenlängenabstand haben.

**24.** Vorrichtung nach einem der Ansprüche 12 bis 23,
**dadurch gekennzeichnet,**
**dass** ein Schrittmotor zur Verstellung des mindestens einen Strahlenganges (10) vorgesehen ist.

**25.** Vorrichtung nach einem der Ansprüche 12 bis 24,
**dadurch gekennzeichnet,**
**dass** die Strahlungsteilereinrichtung (4) einen faseroptischen Richtkoppler, vorzugsweise eine 4x4-Kopplungseinrichtung, oder eine photonische Schaltung mit 3x1- bzw. 3x3- und 2x2-Kopplungseinrichtungen aufweist.

**26.** Vorrichtung nach einem der Ansprüche 12 bis 25,
**dadurch gekennzeichnet,**
**dass** die Strahlungsteilungeinrichtung drei 2x2-Kopplungseinrichtungen aufweist.

**27.** Vorrichtung nach einem der Ansprüche 12 bis 26,
**dadurch gekennzeichnet,**
**dass** ein faseroptischer 1xN-Schalter in einem Lichtleiter (5, 6, 7, 8) zwischen der Strahlungsteilereinrichtung und den Sensoren zum Umschalten zwischen mehreren Sensoren vorgesehen ist.

**28.** Vorrichtung nach einem der Ansprüche 12 bis 27,
**dadurch gekennzeichnet,**
**dass** ein Referenzinterferometer (112) und ein Umschalter (100) zum Umschalten zwischen dem optischen Bandpassfilter (15) und dem Referenzinterferometer (112) vorgesehen ist.

**Claims**

**1.** Method for carrying out interferometric measurements, in which light is supplied to an interferometer sensor mechanism or polarimetric sensor mechanism (19) or a wavelength-modulated sensor mechanism, the light emitted by the interferometer sensor mechanism or polarimetric sensor mechanism or wavelength-modulated sensor mechanism is split into at least two beam paths (9, 10, 11) which are guided at different angles of incidence ($\vartheta_1$, $\vartheta_2$, $\vartheta_3$) through a joint optical bandpass filter (15), and the beam paths which have arrived through the optical bandpass filter are quantitatively measured and the measurement is evaluated in a data processing mechanism, wherein at least one angle of incidence of a beam path (10) is adjustable and measurements can be carried out at different values of the angle of incidence, and wherein the angles of incidence of the other beam paths remain constant.

**2.** Method according to claim 1, **characterised in that** a focusing mechanism (13) provided in the adjustable beam path (10) and an optoelectronic transformer mechanism (17) pertaining thereto are adjusted in a rigidly coupled manner.

**3.** Method according to claim 1 or 2, **characterised in that** an ambient temperature of a light source (1) is measured and a current supply to the light source is increased when the temperature rises and reduced when the temperature falls.

4. Method according to claim 3, **characterised in that** the current intensity of the current supplied to the light source (1) is controlled in such a way that a light output and/or radiant emission characteristic of the light source is kept at least substantially constant.

5. Method according to any one of claims 1 to 4, **characterised in that** three beam paths (9, 10, 11) are used, an upper medium wavelength ($\lambda3$) and a lower medium wavelength ($\lambda1$) having the same spacing from a central medium wavelength ($\lambda2$).

6. Method according to claim 4 or 5, **characterised in that** an interferometer sensor mechanism is used and apart from the phase differences, intensities and/or interference contrasts and/or interference stripe arrangements are furthermore determined from the measured values.

7. Method according to any one of claims 1 to 6, **characterised in that** an interferometer sensor mechanism is used and a phase difference is determined by means of an arctan procedure from quotients of at least two values.

8. Method according to any one of the preceding claims, **characterised in that** various discrete values of the angle of incidence are adjusted over a spectral width of the optical bandpass filter (15).

9. Method according to claim 8, **characterised in that** the discrete values of the angle of incidence are adjusted by stepwise adjustment of a controlled stepping motor.

10. Method according to claim 8, or 9, **characterised in that** an absolute phase position is determined by the measurement over the spectral width of the optical bandpass filter (15).

11. Method according to any one of the preceding claims, **characterised in that** a Bragg reflector mechanism is used, the wavelength of which, modulated by a measured variable, is determined via a standardised intensity difference.

12. Device for carrying out interferometric measurements, in particular for carrying out a method according to any one of claims 1 to 11, comprising a light source (1), an interferometer sensor mechanism (19) or polarimetric sensor mechanism or wavelength-modulated sensor mechanism, a beam splitter mechanism (4) for splitting radiation emitted by the interferometer sensor mechanism (19) or polarimetric sensor mechanism or wavelength-modulated Bragg sensor mechanism into at least two beam paths (9, 10, 11), a joint optical bandpass filter (15), which is arranged in the beam paths (9, 10, 11), wherein the beam paths are guided at various angles of incidence through the joint bandpass filter, comprising an adjustment device (28) for the angle of incidence of at least one beam path (10), where, on the other hand, the angles of incidence of the other beam paths remain constant, photodetectors (16, 17; 18) in the beam paths for quantitative measurement of the light of the beam paths which has arrived through the joint bandpass filter (19), and a data processing mechanism for receiving measuring signals of the photodetectors (16, 17, 18).

13. Device according to claim 12, **characterised in that** the light source is a super luminescent diode or edge-emitting light-emitting diode (1).

14. Device according to claim 12 or 13, **characterised in that** the light source (1) is uncooled.

15. Device according to any one of claims 12 to 14, **characterised in that** the light source (1) has a wavelength between 800 and 1,500 nm and a line width of 40 nm to 100 nm.

16. Device according to any one of claims 12 to 15, **characterised in that** the optical bandpass filter (15) is an interference filter or a Fabry-Perot Etalon.

17. Device according to any one of claims 12 to 16, **characterised in that** focusing mechanisms, in particular graded index lenses, for example Selfoc lenses (12, 13, 14) are provided for focusing the beam paths (9, 10, 11).

18. Device according to claim 17, **characterised in that** at least one focusing mechanism (13) and one photodetector (17) associated with the same beam path (10) can be adjusted, rigidly coupled to one another.

19. Device according to any one of claims 12 to 18, **characterised in that** at least one interferometer sensor, in particular a fibre optic Fabry-Perot microinterferometer sensor is provided at connections (P1, P2, P3, P4) and an arctan method can be used by the data processing mechanism for determining at least one phase difference.

20. Device according to an one of claims 12 to 19, **characterised in that** a temperature sensor (3) for measuring an ambient temperature of the light source (1) is provided and a current supply from a current source (2) to the light source (1) can be increased when the temperature rises and can be reduced when the temperature falls.

21. Device according to claim 20, **characterised in that** the current intensity of the light source (1) can be controlled in such a way that a light output and/or radiant emission characteristic of the light source is kept at least substantially constant.

22. Device according to any one of claims 12 to 21, **characterised in that** at least three beam paths (9, 10, 11) are provided, which pass through the optical bandpass filter (15).

23. Device according to claim 22, **characterised in that** an upper medium wavelength (3) and a lower medium wavelength (1) have the same wavelength spacing from a central medium wavelength (2).

24. Device according to any one of claims 12 to 23, **characterised in that** a stepping motor is provided to adjust the at least one beam path (10).

25. Device according to any one of claims 12 to 24, **characterised in that** the beam splitter mechanism (4) is a fibre optic directional coupler, preferably a 4x4 coupling mechanism or a photonic circuit with 3x1 or 3x3 and 2x2 coupling mechanisms.

26. Device according to any one of claims 12 to 25, **characterised in that** the beam splitting mechanism has three 2x2 coupling mechanisms.

27. Device according to any one of claims 12 to 26, **characterised in that** a fibre optic 1xN switch is provided in a light conductor (5, 6, 7, 8) between the beam splitting mechanism and the sensors for switching over between a plurality of sensors.

28. Device according to any one of claims 12 to 27, **characterised in that** a reference interferometer (112) and a change-over switch (100) are provided for switching over between the optical bandpass filter (15) and the reference interferometer (112).

**Revendications**

1. Procédé pour effectuer des mesures interférométriques, dans lequel de la lumière est amenée à un dispositif à capteur interférométrique ou à un dispositif à capteur polarimétrique (19) ou un dispositif à capteur modulé en longueur d'onde,
la lumière émise par le dispositif à capteur interférométrique ou le dispositif à capteur polarimétrique ou le dispositif à capteur modulé en longueur est divisée en au moins deux trajectoires de rayons (9, 10, 11) qui sont guidées à travers un filtre passe-bande optique commun (15) dans différents angles d'incidence ($\vartheta$1, $\vartheta$2, $\vartheta$3), et
les trajectoires des rayons arrivant à travers le passe-bande optique étant mesurées quantitativement et la mesure étant évaluée dans un dispositif de traitement de données,
au moins un angle d'incidence d'une trajectoire de rayons (10) étant réglable et des mesures pouvant être effectuées en cas de différentes valeurs de l'angle d'incidence, les angles d'incidence des autres trajectoires de rayons restant constants.

2. Procédé selon la revendication 1,
**caractérisé**
**en ce qu'**un dispositif de focalisation (13) prévu dans la trajectoire de rayons (10) réglable et un dispositif transducteur optoélectronique (17) correspondant au dispositif de focalisation sont réglés en étant couplés de manière fixe.

3. Procédé selon la revendication 1 ou 2,
**caractérisé**
**en ce qu'**une température ambiante d'une source de lumière (1) est mesurée et en ce qu'une alimentation en courant vers la source de lumière est augmentée quand la température croît et diminuée quand la température baisse.

**4.** Procédé selon la revendication 3,
**caractérisé**
**en ce que** la force du courant amené à la source de lumière (1) est commandée de telle manière qu'une efficacité lumineuse et/ou une caractéristique de rayonnement de la source de lumière sont au moins essentiellement maintenues constantes.

**5.** Procédé selon l'une quelconque des revendications 1 à 4,
**caractérisé**
**en ce que** trois trajectoires de rayons (9, 10, 11) sont utilisées, une longueur d'onde centrale supérieure ($\lambda 3$) et une longueur d'onde centrale inférieure ($\lambda 1$) ayant le même écart par rapport à une longueur d'onde centrale moyenne ($\lambda 2$).

**6.** Procédé selon la revendication 4 ou 5,
**caractérisé**
**en ce qu'**un dispositif à capteur interférométrique est utilisé et en ce que, outre les différences de phase, des intensités et/ou des contrastes d'interférence et/ou des ordres de franges d'interférences sont en outre déterminés à partir des valeurs de mesure.

**7.** Procédé selon la revendication 1 à 6,
**caractérisé**
**en ce qu'**un dispositif à capteur interférométrique est utilisé et en ce qu'une différence de phase est déterminée à partir de quotients d'au moins deux valeurs de mesure au moyen d'une procédure arctan.

**8.** Procédé selon l'une quelconque des revendications précédentes,
**caractérisé**
**en ce que** différentes valeurs discrètes de l'angle d'incidence sont réglées par l'intermédiaire d'une largeur spectrale du filtre passe-bande optique (15).

**9.** Procédé selon la revendication 8,
**caractérisé**
**en ce que** les valeurs discrètes de l'angle d'incidence sont réglées par réglage progressif d'un moteur pas à pas commandé.

**10.** Procédé selon la revendication 8 ou 9,
**caractérisé**
**en ce qu'**une position de phase absolue est déterminée au moyen de la mesure effectuée par l'intermédiaire de la largeur spectrale du filtre passe-bande optique (15).

**11.** Procédé selon l'une quelconque des revendications précédentes,
**caractérisé**
**en ce qu'**un dispositif réflecteur de Bragg est utilisé, dont la longueur d'onde modulée au moyen d'une grandeur de mesure est déterminée par l'intermédiaire d'une différence d'intensité normalisée.

**12.** Dispositif pour effectuer des mesures interférométriques, en particulier pour la réalisation d'un procédé selon l'une quelconque des revendications 1 à 11, comprenant une source de lumière (1),
un dispositif à capteur interférométrique (19) ou un dispositif à capteur polarimétrique ou un dispositif à capteur modulé en longueur d'onde,
un dispositif diviseur de rayonnement (4) pour diviser un rayonnement émis par le dispositif à capteur interférométrique (19) ou le dispositif à capteur polarimétrique ou le dispositif de Bragg à capteur modulé en longueur d'onde en au moins deux trajectoires de rayons (9, 10, 11),
un filtre passe-bande optique commun (15) qui est disposé dans les trajectoires des rayons (9, 10, 11), les trajectoires des rayons étant guidées à travers le filtre passe-bande commun dans différents angles d'incidence,
comprenant un dispositif de réglage (28) pour l'angle d'incidence d'au moins une trajectoire de rayons (10), les angles d'incidence des autres trajectoires de rayons restant constants,
des photodétecteurs (16, 17, 18) dans les trajectoires des rayons pour la mesure quantitative de la lumière des trajectoires des rayons arrivant à travers le filtre passe-bande commun (19), et
un dispositif de traitement de données pour la réception de signaux de mesure des photodétecteurs (16, 17, 18).

**13.** Dispositif selon la revendication 12,
**caractérisé**
**en ce que** la source de lumière est une diode superiuminescente ou une diode électroluminescente à émission par la tranche (1).

**14.** Dispositif selon la revendication 12 ou 13,
**caractérisé**
**en ce que** la source de lumière (1) est non refroidie.

**15.** Dispositif selon l'une quelconque des revendications 12 à 14,
**caractérisé**
**en ce que** la source de lumière (1) présente une longueur d'onde comprise entre 800 et 1 500 nm et une largeur de ligne de 40 nm à 100 nm.

**16.** Procédé selon l'une quelconque des revendications 12 à 15,
**caractérisé**
**en ce que** le filtre passe-bande optique (15) est un filtre d'interférence ou un étalon Fabry et Pérot.

**17.** Dispositif selon l'une quelconque des revendications 12 à 16,
**caractérisé**
**en ce que** des dispositifs de focalisation, en particulier des lentilles à gradient d'indice, par exemple des lentilles Selfloc (12, 13, 14) sont prévues pour focaliser les trajectoires des rayons (9, 10, 11).

**18.** Dispositif selon la revendication 17,
**caractérisé**
**en ce qu'**au moins un dispositif de focalisation (13) et un photodétecteur (17) affecté à la même trajectoire de rayons (10) sont réglables en étant couplés entre eux de manière fixe.

**19.** Dispositif selon l'une quelconque des revendications 12 à 18,
**caractérisé**
**en ce qu'**au moins un capteur d'interféromètre, en particulier un capteur de micro-interféromètre de Fabry et Pérot à fibre optique, est prévu sur des raccords (P1, P2, P3, P4), et en ce qu'un procédé arctan est utilisable par le dispositif de traitement de données pour déterminer une différence de phase.

**20.** Dispositif selon l'une quelconque des revendications 12 à 19,
**caractérisé**
**en ce qu'**un capteur de température (3) est prévu pour mesurer une température ambiante de la source de lumière (1) et en ce qu'une alimentation en courant d'une source de courant (2) vers la source de lumière (1) peut être augmentée quand la température croît et peut être diminuée quand la température baisse.

**21.** Dispositif selon la revendication 20,
**caractérisé**
**en ce que** l'intensité du courant de la source de lumière (1) est commandable de telle manière qu'une efficacité lumineuse et/ou une caractéristique de rayonnement de la source de lumière sont au moins essentiellement maintenues constantes.

**22.** Dispositif selon l'une quelconque des revendications 12 à 21,
**caractérisé**
**en ce qu'**au moins trois trajectoires de rayons (9, 10, 11) sont prévues, celles-ci passant à travers le filtre passe-bande optique (15).

**23.** Dispositif selon la revendication 22,
**caractérisé**
**en ce qu'**une longueur d'onde centrale supérieure (3) et une longueur d'onde centrale inférieure (1) ont le même écart de longueur d'onde par rapport à une longueur d'onde centrale moyenne (2).

**24.** Dispositif selon l'une quelconque des revendications 12 à 23,
**caractérisé**

**en ce qu'**un moteur pas à pas est prévu pour le réglage d'au moins une trajectoire de rayons (10).

25. Dispositif selon l'une quelconque des revendications 12 à 24,
    **caractérisé**
    **en ce que** le dispositif diviseur de rayonnement (4) est un coupleur directionnel à fibre optique, de préférence un dispositif de couplage 4x4 ou un circuit photonique doté de dispositifs de couplage 3x1 ou 3x3 ou 2x2.

26. Dispositif selon l'une quelconque des revendications 12 à 25,
    **caractérisé**
    **en ce que** le dispositif diviseur de rayonnement présente trois dispositifs de couplage 2x2.

27. Dispositif selon l'une quelconque des revendications 12 à 26,
    **caractérisé**
    **en ce qu'**un commutateur 1xN à fibre optique est prévu dans une fibre optique (5, 6, 7, 8), entre le dispositif diviseur de rayonnement et les capteurs, pour commuter entre plusieurs capteurs.

28. Dispositif selon l'une quelconque des revendications 12 à 27,
    **caractérisé**
    **en ce qu'**un interféromètre de référence (112) et un commutateur (100) sont prévus pour commuter entre le filtre passe-bande optique (15) et l'interféromètre de référence (112).

Fig. 1

Fig. 2

**Fig.3**

**Fig. 4**

Fig. 5

Fig.6

Fig.7

Fig. 8

Fig. 9

Fig. 10

Fig.11

Fig. 12

Fig. 13